# EUROPEAN PATENT APPLICATION

(11) **EP 4 340 102 A1**
(43) Date of publication of application: **20.03.2024**
(21) Application number: 22842463.6
(22) Date of filing: 13.07.2022
(51) Int. Cl.: H01M 50/204, H01M 50/50

(54) **BATTERY PACK**

(30) Priority: 13.07.2021 KR 20210091794
(71) Applicant: LG ENERGY SOLUTION, LTD., Seoul 07335 (KR)
(72) Inventor: AN, Ji-Myong, Daejeon 34122 (KR); LEE, Bum-Jick, Daejeon 34122 (KR); SON, Young-Su, Daejeon 34122 (KR); LEE, Young-Kyu, Daejeon 34122 (KR)
(74) Representative: Plasseraud IP
(86) International application number: PCT/KR2022/010225
(87) International publication number: WO 2023/287201

(57) **Abstract**

According to an aspect of the present disclosure, there may be provided a battery pack including a pack case; and two cell module assemblies each having cylindrical battery cells and a cell frame accommodating the cylindrical battery cells, and being integrally accommodated in the pack case, wherein the two cell module assemblies are configured such that the top caps of the cylindrical battery cells face each other with at least a predetermined minimum safety distance therebetween.

## Description

### TECHNICAL FIELD

The present application claims priority to Korean Patent Application No. 10-2021-0091794 filed on July 13, 2021 in the Republic of Korea, the disclosures of which are incorporated herein by reference.

The present disclosure relates to a battery technology, and more specifically, to a battery pack having improved safety against fire, electrical safety, assembly convenience, heat dissipation, and the like, and an apparatus including the same.

### BACKGROUND ART

As the demand for portable electronic products such as laptops, video cameras, and mobile phones has rapidly increased in recent years and the commercialization of robots, electric vehicles, and the like, has begun in earnest, research on high-performance secondary batteries capable of repeated charge/discharge has been actively conducted.

Currently commercialized secondary batteries include nickel cadmium batteries, nickel hydride batteries, nickel zinc batteries, lithium secondary batteries, and the like. Among them, lithium secondary batteries are in the spotlight because they have almost no memory effect compared to nickel-based secondary batteries and thus have advantages of free charge/discharge, very low self-discharge rate, and high energy density.

Such a lithium secondary battery mainly uses a lithium-based oxide and a carbon material as a positive electrode active material and a negative electrode active material, respectively. The lithium secondary battery includes an electrode assembly in which a positive electrode plate and a negative electrode plate coated with the positive electrode active material and the negative electrode active material, respectively are disposed with a separator interposed therebetween, and a casing, that is, a battery case, for sealing and accommodating the electrode assembly along with an electrolyte.

In general, depending on the shape of a casing, lithium secondary batteries may be classified into a can-type secondary battery in which an electrode assembly is embedded in a metal can, and a pouch-type secondary battery in which an electrode assembly is embedded in a pouch of an aluminum laminate sheet.

Recently, secondary batteries are widely used for driving or energy storage in medium and large devices such as electric bikes, electric vehicles, home or industrial energy storage systems (ESS), and the like, as well as in small devices such as portable electronic devices. In particular, when a plurality of secondary batteries constitute one battery pack, the plurality of secondary batteries may be grouped into several groups such as a cell module assembly and included in the battery pack.

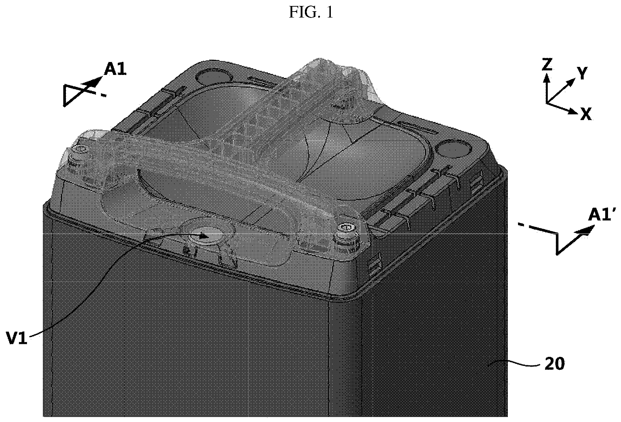

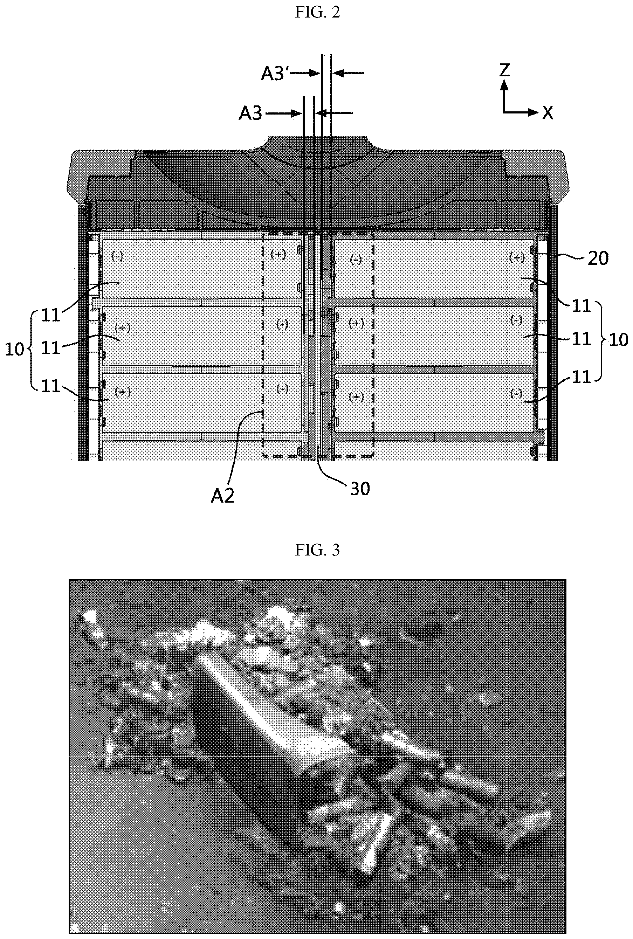

FIG. 1 is a perspective view schematically illustrating a partial configuration of a conventional battery pack, and FIG. 2 is a cross-sectional view taken along line A1-A1' of FIG. 1.

Referring to FIGS. 1 and 2, two cell module assemblies 10 are included in the pack case 20. In addition, each cell module assembly 10 includes a plurality of battery cells 11 such as cylindrical batteries. At this time, each battery cell 11 has a positive electrode terminal (+) and a negative electrode terminal (-) located at both ends, and may be stacked in a vertical direction (Z-axis direction) in a state lying down in a horizontal direction (X-axis direction) so that the positive electrode terminal (+) and the negative electrode terminal (-) are located at both ends in a horizontal direction.

In particular, the adjacent battery cells 11 in one cell module assembly 10 may be configured in a form in which a positive electrode terminal and a negative electrode terminal are connected to each other and electrically connected in series. In this case, the electrical connection between the two battery cells 11 may be implemented in a manner such as spot welding a metal plate-shaped bus bar with a positive electrode terminal and/or a negative electrode terminal, or the like. However, for convenience of electrical connection in this implementation method, as shown in FIG. 2, several battery cells 11 in one cell module assembly 10 may be arranged in a form where the positions of the positive electrode terminal and the negative electrode terminal are mutually misaligned. Also, due to such a configuration, as indicated by A2 in FIG. 2, a structure in which the positive electrode terminal and the negative electrode terminal face each other may be formed between the two cell module assemblies 10.

However, according to such a conventional battery pack configuration, there may be a problem that a chain ignition between the two cell module assemblies 10 occurs easily. In particular, when abnormal ignition occurs in any one of the battery cells 11, the flame or high-temperature gas may be vented toward the positive electrode (+) side, and if the vented flame or gas is directed toward the negative electrode (-) side of the other cell module assembly 10, the temperature of the battery cell 11 may be increased abnormally. Therefore, in this case, the fire occurred in one cell module assembly 10 is propagated to another cell module assembly 10, and as shown in FIG. 3, there is a high possibility that the cell module assemblies 10 may explode due to a chain ignition therebetween.

Conventionally, in order to solve this problem, as shown in FIG. 2, a method of placing a member capable of blocking flame or heat, such as a flame retardant sheet 30, between two cell module assemblies 10 has been proposed. However, in the case of such a configuration, there is a problem in that the cost increases and the process becomes complicated due to the member of the flame retardant sheet 30. In addition, in the case of such a configuration, when a flame is ejected from the positive electrode of one of the battery cells 11, there may be a problem that the ejected flame is reflected from the flame retardant sheet 30 and directed to the other battery cells 11 in the same cell module assembly 10. Therefore, in order to prevent such a problem, it is necessary to secure a space between the flame retardant sheet 30 and the cell module assembly 10 at a certain level or more. For example, as indicated by A3 and A3' in FIG. 2, the flame retardant sheet 30 and each cell module assembly 10 need to be spaced apart by a predetermined distance or more. For example, the distances marked A3 and A3' need to be designed to be 5 mm or more. Therefore, in this case, the size of the battery pack may be increased due to the thickness of the flame retardant sheet 30 itself and the space between the flame retardant sheet 30 and the two cell module assemblies 10.

In addition, in the case of a conventional battery pack, gas or flame ejected from the cell module assembly 10 therein may be discharged to the outside through the venting portion V1 at the top of the pack case 20. However, in the case of such a configuration, the risk of the user being directly exposed to the flame or high-temperature gas discharged from the venting portion V1 may increase.

### DISCLOSURE

### Technical Problem

The present disclosure is designed to solve the problems of the related art, and therefore the present disclosure is directed to providing a battery pack having an improved structure so that safety may be enhanced, and an apparatus including the same.

The present disclosure is also directed to providing a battery pack that is excellent not only in fire safety but also in assembly convenience and heat dissipation, and in which the width and length of the battery pack may be reduced compared to the prior art.

Other objects and advantages of the present disclosure may be understood by the following description, and will be more clearly understood by the embodiments of the present disclosure. It will also be easily understood that the objects and advantages of the present disclosure may be realized by the means and combinations thereof indicated in the scope of appended claims.

### Technical Solution

A battery pack according to an aspect of the present disclosure for achieving the above object may include a pack case; and two cell module assemblies each having cylindrical battery cells and a cell frame accommodating the cylindrical battery cells, and being integrally accommodated in the pack case, wherein the two cell module assemblies may be configured such that the top caps of the cylindrical battery cells face each other with at least a predetermined minimum safety distance therebetween.

The two cell module assemblies may be configured such that the top cap of each cylindrical battery cell facing each other is disposed at the center of the pack case, and the bottom surface of the battery can of each cylindrical battery cell is disposed to face the wall surface of the pack case.

The minimum safety distance may be at least 5 mm.

The two cell module assemblies may include a first cell module assembly and a second cell module assembly, wherein one surface of the first cell frame to which the top cap of the cylindrical battery cell is exposed in the first cell module assembly and one surface of the second cell frame to which the top cap of the cylindrical battery cell is exposed in the second cell module assembly are spaced apart by at least the minimum safety distance, and an empty space formed between one surface of the first cell frame and one surface of the second cell frame communicates with a bottom plate in the pack case, and a venting portion may be provided on the bottom plate.

The pack case may include a middle case having a hollow structure with open upper and lower ends and surrounding the periphery of the two cell module assemblies; an upper cover that covers the upper opening of the middle case; and a lower cover that covers the lower opening of the middle case, wherein the lower cover may include the bottom plate and the venting portion.

The middle case may include a first wall surface and a second wall surface that face the bottom surface of the battery can of the cylindrical battery cell and extend along the longitudinal direction of the pack case in parallel with each other; and a third wall surface and a fourth wall surface that cover both sides of the empty space formed between one surface of the first cell frame and one surface of the second cell frame while being spaced apart from both sides of the empty space by a predetermined distance and extend along the longitudinal direction of the pack case in parallel with each other.

The battery pack may include a bottom plate coupled to the inside of the middle case to cover and support the lower ends of the two cell module assemblies facing the lower cover, wherein the bottom plate may include a gas passage portion forming a gap with at least one of the third wall surface and the fourth wall surface.

The venting portion may include a venting cap that is press-fitted to the through hole formed in the bottom plate.

The venting cap may include a cap body that is press-fitted to the through hole; and a membrane structure that is coupled to the inside of the cap body, is impermeable to liquid and is permeable to gas.

The cylindrical battery cells may be accommodated in the cell frame so that the top caps all face the same direction.

The cell frame may be provided to be open at one side thereof and may include an accommodating portion provided to form a space for accommodating the battery cells upright and to have a height corresponding to the length of the battery cells; an upper plate portion covering the upper end direction of the battery can; and an opening exposing the bottom surface of the battery can to the opposite surface of the upper plate portion, wherein the upper plate portion may include terminal connection holes that partially expose the top cap of the battery can or the upper edge of the battery can.

Metal bus bar plates may be attached to the outer surface of the upper plate portion of the cell frame, and the bus bar plates may be wire-bonded to an upper edge of the battery can or the top cap of each of the battery cells exposed through the terminal connection holes.

The battery pack may include a cell spacer that surrounds all or part of the periphery of the lower end of the battery can and is coupled to the opening of the cell frame.

The battery pack may include a thermally conductive member where one side is in contact with the bottom surface of the battery can and the other side is in contact with the wall surface of the pack case.

A potting glue may be applied to the outer surface of the upper plate portion of the cell frame, so that the top cap and the upper edge of the battery can may be covered with the potting glue.

According to another aspect of the present disclosure, there may be provided an electric bike including the above-described battery pack.

According to still another aspect of the present disclosure, there may be provided an electric vehicle including the above-described battery pack.

### Advantageous Effects

According to an aspect of the present disclosure, in a battery pack including two cell module assemblies, it is possible to effectively prevent a chain ignition between the cell module assemblies.

Moreover, in the case of the present disclosure, even if there is no separate flame retardant or heat dissipation sheet, a chain ignition between two cell module assemblies facing each other may be effectively prevented.

Therefore, the cost may be reduced and the manufacturing process may be simplified due to the removal of such a flame retardant sheet or the like.

In addition, according to an aspect of the present disclosure, as the distance between the cell module assemblies becomes closer, the size of the battery pack may be reduced. Therefore, it may be advantageous for the configuration of a compact battery pack.

Also, according to an aspect of the present disclosure, since direct exposure of the flame to the battery user may be avoided, safety may be enhanced.

In addition, according to another aspect of the present disclosure, there may be provided a cell module assembly that is excellent in electrical safety and heat dissipation, and a battery pack including the same.

In other words, in the battery pack according to an aspect of the present disclosure, since the components for electrical connection and the components for voltage/temperature sensing are located in the inner central region of the pack case, durability and electrical safety against external shocks may be increased, and since the bottom surfaces of all battery cells are positioned on the wall side of the pack case, heat dissipation may be made effectively.

The advantageous effects to be obtained by the present disclosure are not limited to the above-described effects, and other effects not mentioned herein may be clearly understood by those skilled in the art from the following description of the present disclosure.

### DESCRIPTION OF DRAWINGS

FIG. 1 is a perspective view schematically illustrating a partial configuration of a conventional battery pack.
FIG. 2 is a cross-sectional view taken along line A1-A1' of FIG. 1.
FIG. 3 is a photograph showing a battery pack burnt out due to a chain ignition when one battery cell is overcharged and exploded in a conventional battery pack without a flame retardant sheet.
FIG. 4 is a transparent perspective view schematically illustrating a configuration of a battery pack according to an embodiment of the present disclosure.
FIG. 5 is a cross-sectional view schematically illustrating an example of a cross-sectional configuration taken along line A4-A4' of FIG. 4.
FIG. 6 is a photograph showing a test result when one battery cell is overcharged and exploded in the battery pack according to an embodiment of the present disclosure.
FIG. 7 is an enlarged perspective view of a lower portion of the battery pack of FIG. 4.
FIG. 8 is a cross-sectional view schematically illustrating an example of a cross-sectional configuration taken along line A5-A5' of FIG. 4.
FIG. 9 is a view illustrating the bottom plate of the battery pack of FIG. 4.
FIG. 10 is a view illustrating a cut-out of the venting portion region of FIG. 9.
FIG. 11 is a partially exploded perspective view of a battery pack according to an embodiment of the present disclosure.
FIG. 12 is a perspective view of the first cell module assembly of FIG. 11.
FIG. 13 is a view illustrating a cell frame of the first cell module assembly of FIG. 12.
FIG. 14 is a view illustrating an opening side of a cell spacer and a cell frame according to an embodiment of the present disclosure.
FIG. 15 is a view illustrating a shape after assembly of the cell spacer and the cell frame of FIG. 14.
FIG. 16 is a view illustrating a shape after assembly of a thermally conductive member on the opening side of the cell frame in FIG. 15.
FIG. 17 is a view illustrating an upper plate portion of the cell frame according to an embodiment of the present disclosure.
FIG. 18 is a view illustrating a portion of an upper plate portion and a side portion of the cell frame of FIG. 17.
FIGS. 19 and 20 are views illustrating shapes before and after assembly of the two cell module assemblies according to an embodiment of the present disclosure.
FIG. 21 is a view illustrating an upper plate portion of the cell frame of the two cell module assemblies according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

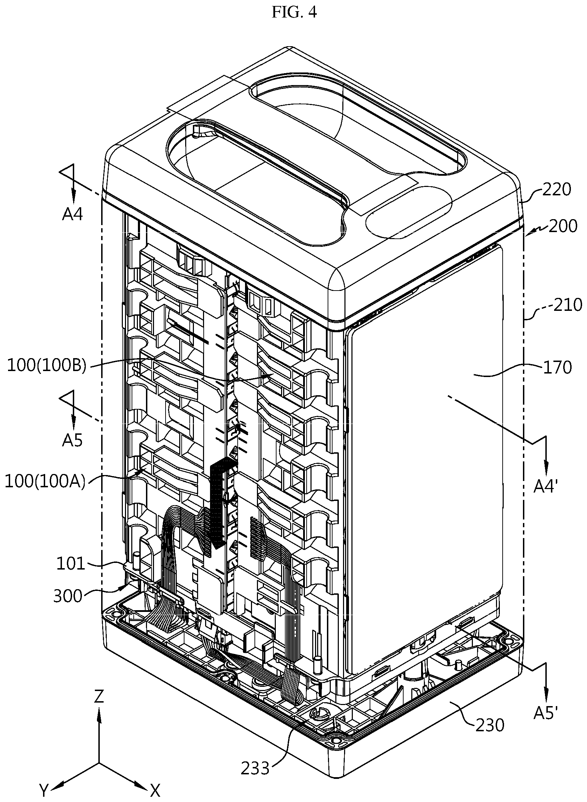

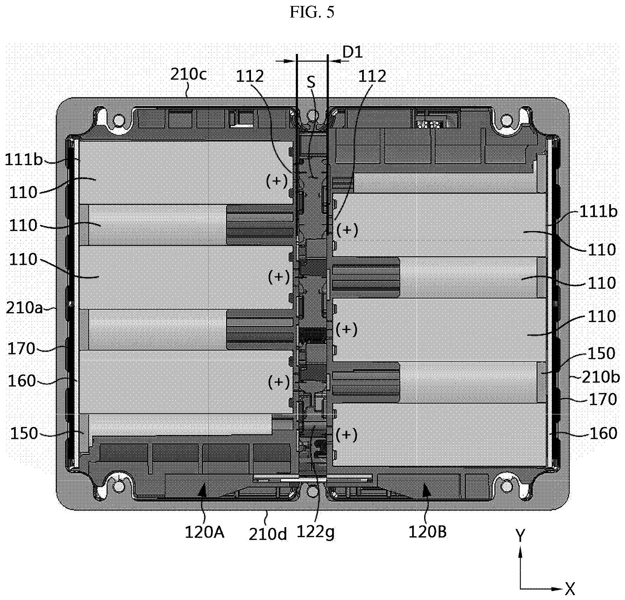

FIG. 4 is a transparent perspective view schematically illustrating a configuration of a battery pack according to an embodiment of the present disclosure, and FIG. 5 is a cross-sectional view schematically illustrating an example of a cross-sectional configuration taken along line A4-A4' of FIG. 4.

Referring to FIGS. 4 and 5, the battery pack of the present disclosure includes a cell module assembly 100, a BMS assembly 300, and a pack case 200.

First, when it comes to the pack case, the pack case 200 includes a middle case 210, an upper cover 220, and a lower cover 230. The middle case 210 may be configured in a hollow shape in which the upper and lower ends are opened, and the cell module assembly 100 and the BMS assembly 300 coupled to the lower side thereof may be integrally inserted therein in a slide manner. In addition, the upper cover 220 and the lower cover 230 may be coupled to the open upper and lower ends of the middle case 210, respectively, and may be configured to cover the upper and lower ends of the middle case 210. In particular, the middle case 210 may be made of a material having high mechanical rigidity and excellent heat dissipation so as to protect the cell module assembly 100 and the BMS assembly 300 from external impact, for example, a metal material such as aluminum (Al).

A flame retardant plate may be disposed in a space between the middle case 210 and the upper cover 220, and a gasket having a high compression rate, a gap filling material, or the like may be applied to an outer edge where the middle case and the upper cover are coupled. In addition, a gasket having a relatively low compression rate compared to the upper cover 220 is applied to the outer edge where the middle case 210 and the lower cover 220 are coupled, and the lower cover 230 may be configured to include a venting portion 233. Therefore, when gas and flame are generated inside the battery pack due to abnormal ignition of the battery cell, the gas and flame may be induced from the pack case toward the lower cover having weak airtightness.

The two cell module assemblies 100A, 100B may include cylindrical battery cells 110 connected in series and parallel in the form of nPmS (n and m are natural numbers) and a cell frame 120 accommodating the cylindrical battery cells 110, wherein the cell frames 120A, 120B are coupled to each other to be integrally accommodated in the pack case 200. That is, the two cell module assemblies 100A, 100B are mechanically and electrically coupled to each other, and may be accommodated in the pack case 200 in the form of being inserted into the middle case 210 by a slide or interference fit method.

The cylindrical battery cell 110 may be one in which an electrolyte and an electrode assembly are put in a cylindrical battery can, and the top cap 112 is coupled to the upper open end of the battery can and then sealed. The cylindrical battery cell 110 may have an electrode assembly wound in a jelly-roll type with a separator interposed between a positive electrode plate and a negative electrode plate, wherein the positive electrode plate may be electrically connected to the top cap and the negative electrode plate may be electrically connected to the battery can. Therefore, in the case of a cylindrical battery cell, the top cap may function as a positive electrode terminal and the battery can may function as a negative electrode terminal. Here, a portion of the battery can except for the specific portion may be coated with an insulating film or an insulating material so that only the specific portion functions as a negative electrode terminal.

In particular, in the battery pack according to the present disclosure, the two cell module assemblies 100A, 100B may be configured such that the top caps 112 of the cylindrical battery cells 110 face each other.

For example, referring to the configuration of FIG. 5, the two cell module assemblies 100A, 100B may be configured such that the top cap 112 of each battery cell 110 faces the central portion of the battery pack, and the bottom surface 111b of the battery can of each battery cell 110 faces the outer portion of the battery pack. More specifically, the first cell module assembly 100A located on the left side (-X direction) in the drawing may be disposed such that the top caps 112 of all the battery cells 110 face the right side and the bottom surface 111b of the battery can faces the left side. In addition, the second cell module assembly 100B located on the right side (+X direction) may be disposed such that the top caps 112 of all the battery cells 110 face the left side and the bottom surface 111b of the battery can faces the right side.

According to this configuration of the present disclosure, the top cap 112 of each battery cell 110 may be disposed close to the top cap 112 of the other battery cell 110, and may be away from the bottom surface 111b of the battery can of the other battery cell 110. Therefore, when a flame or high-temperature gas is ejected from the top cap 112 side of one battery cell 110, the ejected flame or high-temperature gas is directed toward the top cap 112 of the other battery cell 110 and may have little effect on the bottom surface 111b of the battery can of the other battery cells 110.

When the cylindrical battery cells 110 are mostly ignited abnormally due to their structural characteristics, a flame or gas is ejected toward the top cap 112. At this time, the probability of a chain ignition is lower when the top cap 112 of the other battery cell 110 is located on the opposite side of the exploded battery cell 110, rather than when the bottom surface 111b of the battery can of the other battery cell 110 is located thereon.

In other words, in the cylindrical battery cell 110, the top cap 112 has a relatively higher rigidity than the battery can, and a vent plate, a sealing material, or a current interrupt device (CID) is disposed inside the top cap 112, thereby blocking the transfer of heat or flame to the electrode assembly and the electrolyte inside the battery can. However, when heat and flames are in direct contact with the battery can, the temperature of the battery can rises rapidly and then the internal separator melts and disappears, which greatly increases the possibility that a short circuit may occur due to direct contact between the positive electrode plate and negative electrode plate. In particular, the bottom surface of the battery can is close to the bottom surface of the jelly-roll type electrode assembly, and thus when heat and flame are in contact with the corresponding portion, heat is transferred to the inside more quickly, thereby causing a short circuit more easily. Therefore, when flame and gas are ejected from a certain battery cell 110, it may be much more effective in preventing the chain ignition of the battery cells 110 to face the top cap 112 of the other battery cell 110 in the opposite side of the corresponding battery cell 110, rather than to face the bottom surface 111b of the battery can.

Accordingly, the two cell module assemblies 100A, 100B according to the present disclosure are configured such that the top caps 112 of the battery cells 110 face each other.

In addition, the two cell module assemblies 100A, 100B may be configured such that the top caps 112 of the battery cells 110 are spaced apart from each other by a minimum safety distance or more. Here, the minimum safety distance is a distance obtained through an experiment in which a battery cell is overcharged and exploded, and is the minimum separation distance between the first cell module assembly 100A and the second cell module assembly 100B in which the battery cell 110 located on the other side may not be ignited when one of the battery cells 110 facing each other explodes. However, the minimum safety distance may be slightly different depending on the type, capacity, specification, or the like of the battery cell included in the battery pack.

For example, as shown in FIG. 5, one surface of the first cell frame 120A where the top cap 112 of the cylindrical battery cell 110 is exposed in the first cell module assembly 110A and one surface of the second cell frame 120B where the top cap 112 of the cylindrical battery cell 110 is exposed in the second cell module assembly 110B may be configured to be spaced apart by at least a minimum safety distance, as indicated by 'D1' in FIG. 5. In this case, the minimum safety distance may be '5 mm'.

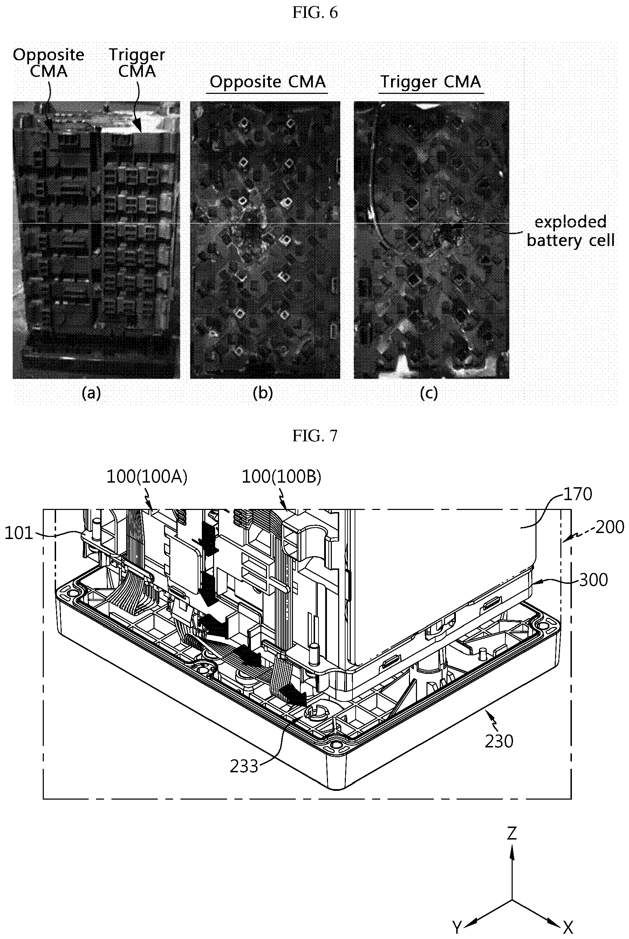

FIG. 6 is a photograph showing a test result when one battery cell is overcharged and exploded in the battery pack according to an embodiment of the present disclosure.

FIG. 6 (a) shows the state of two cell module assemblies after one battery cell included in the cell module assembly indicated by the trigger CMA explodes, and FIGS. 6 (b) and (c) show the state in which the two cell module assemblies are separated, respectively.

As a result of the experiment in which the minimum safety distance was set to 5 mm or more and one battery cell included in the trigger CMA was overcharged and exploded, it was confirmed that the battery cell of the other CMA did not undergo chain ignition even if a flame was ejected from one battery cell of the trigger CMA, as shown in FIG. 6. However, when the minimum safety distance was less than 5 mm, a chain ignition of the battery cell of the other CMA was observed. Based on these experimental results, it can be said that the battery pack of the present disclosure is configured such that the top caps 112 of the battery cells 110 facing each other maintain an interval of at least 5 mm.

According to this exemplary configuration of the present disclosure, it is possible to more reliably prevent a chain ignition from occurring between the cell module assemblies 100 in which the top cap 112 of each battery cell 110 faces each other. Moreover, in this case, the distance between the two cell module assemblies 100A, 100B may be formed to be shorter compared to a conventional battery pack. For example, in the case of a conventional battery pack, as a condition that the battery cells included in the other cell module assembly do not undergo chain ignition in an experiment where a battery cell included in one cell module assembly is overcharged and exploded, the distances indicated by A3 and A3' in FIG. 2 had to be at least 5 mm, respectively.

That is, in order to secure safety against flames or the like, the distance between the flame retardant sheet 30 and each cell module assembly 10 needs to be secured at a level of 5 mm or more. In addition, in this case, the thickness of the flame retardant sheet 30 itself should also be considered. On the other hand, in the case of the present disclosure, it is sufficient to secure the distance between the cell module assemblies 100 by 5 mm or more without the flame retardant sheet 30. Therefore, according to the exemplary configuration of the present disclosure, the distance between the cell module assemblies may be reduced to a significant level, for example, less than 50% compared to the prior art. Thus, according to this aspect of the present disclosure, the size of the battery pack may be reduced.

In addition, in the battery pack according to the present disclosure, as shown in FIGS. 4 and 5, the top cap 112 of all the cylindrical battery cells 110 included in the two cell module assemblies 100A, 100B is disposed in central portion of the pack case, and the bottom surface 111b of the battery can is disposed to face the wall surface of the middle case 210 closely. In this case, the heat of the cylindrical battery cells 110 may be easily radiated to the middle case 210. Furthermore, a thermally conductive material may be disposed in the space between the bottom surface 111b of the cylindrical battery cells 110 and the middle case 210, thereby allowing heat to be discharged from the cylindrical battery cells 110 to the middle case 210 more quickly.

As shown in FIG. 5, when the two cell module assemblies 100 are included in the battery pack, the bottom surface 111b of the battery can with respect to all the battery cells 110 may be thermally connected to the pack case 200 with only the two heat dissipation pads 170. Therefore, according to this exemplary configuration, it is simple for the arrangement and assembly of the heat dissipation pad 170, and the heat conduction effect may be achieved for many battery cells 110 with a small number of heat dissipation pads 170. In addition, according to the exemplary configuration, since the heat dissipation pad 170 is disposed only on the bottom surface 111b side of the battery can of each battery cell 110, a problem in which the venting function of the top cap 112 side is deteriorated by the heat dissipation pad 170 may be prevented.

In addition, the battery pack according to the present disclosure may be configured to be discharged in a specific direction when gas or flame is generated therein. As described above, one surface of the first cell frame 120A of the first cell module assembly 100A and one surface of the second cell frame 120B of the second cell module assembly 100B are spaced apart by at least a minimum safety distance, and thus an empty space S exists between the first cell module assembly 100A and the second cell module assembly 100B. The empty space S communicates up to the bottom plate 231 of the pack case 200, and a venting portion 233 may be provided in the bottom plate 231. Here, the bottom plate 231 of the pack case 200 means the lower cover 230. Also, the upper side (+Z direction) of the empty space S may be blocked by the upper cover 220, and both sides (±Y direction) of the empty space S may be shielded by the wall surface of the middle case 210. Therefore, when a specific battery cell 110 included in the two cell module assemblies 100A, 100B is ignited abnormally and gas or flame is ejected from the top cap 112, the gas or flame may move in the lower direction of the pack case 200 and may be discharged in the lower direction of the battery pack through the venting portion 233, as indicated by arrows in FIGS. 4 and 7.

Hereinafter, more specifically, the configuration of an exhaust path of gas or flame of the battery pack according to the present embodiment will be described with reference to FIGS. 4, 5 and 7 to 9.

As shown in FIGS. 4 and 5, the middle case 210 of the pack case 200 includes a first wall surface 210a and a second wall surface 210b that face the bottom surface 111b of the battery can of the cylindrical battery cell 110 and extend along the longitudinal direction of the pack case 200 in parallel with each other, and a third wall surface 210c and a fourth wall surface 210d that cover both sides of the empty space S formed between one surface of the first cell frame 120A and one surface of the second cell frame 120B at a predetermined distance apart from both sides of the empty space S, and extend along the longitudinal direction of the pack case 200 in parallel with each other.

In addition, as shown in FIG. 4, the cell frame 120 of the two cell module assemblies 100A, 100B has a convex pattern on the side surface, and as shown in FIG. 5, the convex pattern portion is in contact with the third wall surface 210c and the fourth wall surface 210d of the middle case, thereby forming a gap between both sides of the empty space S and the wall surface of the middle case 210. The gas or flame may move downward along the third wall surface 210c or the fourth wall surface 210d of the middle case 210 through the surplus space secured by the gap.

Meanwhile, the battery pack according to an embodiment of the present disclosure further includes a bottom plate 101 covering the lower ends of the two cell module assemblies 100A, 100B facing the lower cover 230 from the inside of the middle case 210.

The bottom plate 101 serves as a bracket for easily fixing the BMS assembly 300 to the lower side of the two cell module assemblies 100A, 100B. In addition, the bottom plate 101 is fixedly coupled to the inside of the middle case 210 to support the two cell module assemblies 100A, 100B so that the two cell module assemblies 100A, 100B are positioned at a predetermined height with respect to the lower cover 230, thereby preventing the BMS assembly 300 from being not subjected to the load of the two cell module assemblies 100A, 100B.

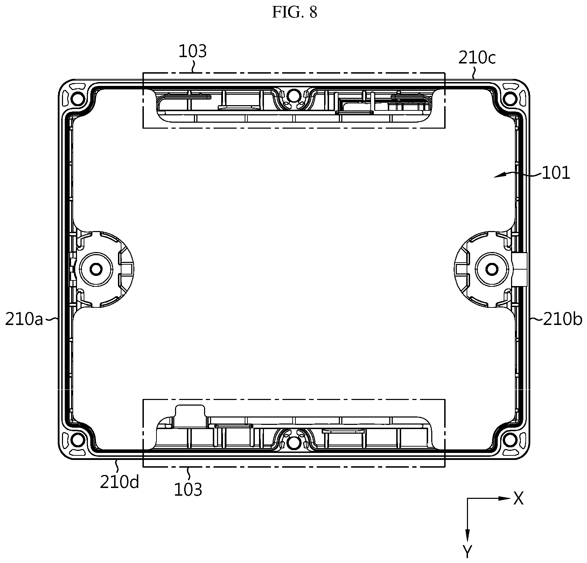

The bottom plate 101 may be configured in the form of a plate-shaped body having a size approximately corresponding to the cross-sectional area of the middle case 210 so as to be disposed between the two cell module assemblies 100A, 100B and the BMS assembly 300 and to stably support the two cell module assemblies 100A, 100B. In particular, as shown in FIG. 8, the bottom plate 101 includes a gas passage portion 103 forming a gap with at least one of the third wall surface 210c and the fourth wall surface 210d of the middle case 210. Therefore, when the gas or flame moves downward from the third wall surface 210c and the fourth wall surface 210d of the middle case, or the empty space S in the center of the pack case 200 and reaches the bottom plate 101, the flow of the gas or flame may be guided below the third wall surface 210c or the fourth wall surface 210d through the gas passage portion 103.

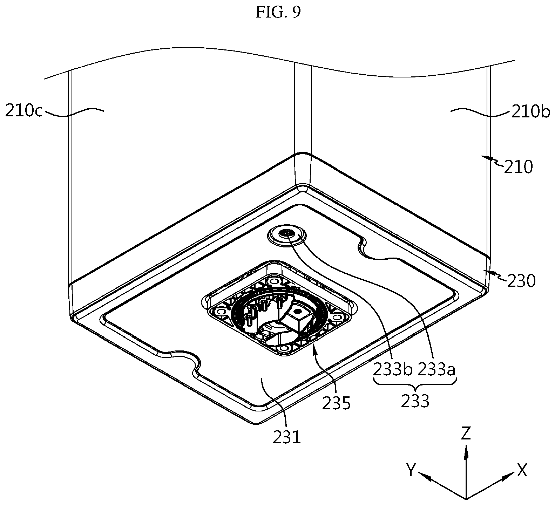

As shown in FIG. 9, the venting portion 233 may be provided at a position close to the third wall surface 210c or the fourth wall surface 210d in the bottom plate 231 of the lower cover 230. There is one venting portion 233 in the present embodiment, but two or more venting portions 233 may be configured on the bottom plate 231 of the lower cover 230. For reference, the battery pack according to the present embodiment includes an external system connection unit 235 for connection with an external device on the bottom plate 231. Power of the battery pack may be supplied to an external device by connecting, for example, a power cable (not shown) to the external system connection unit 235. However, the external system connection unit may be disposed on the upper cover 220 side or omitted according to the need.

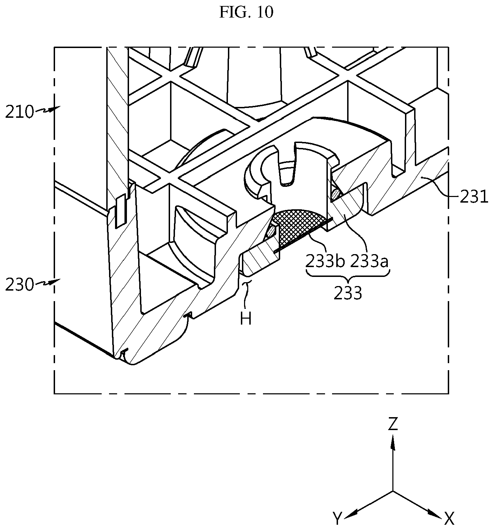

More specifically, as in the embodiment of FIG. 10, the venting portion 233 may be configured in the form of a venting cap that is press-fitted to a through hole H formed in the bottom plate 231 of the lower cover 230. Also, the venting cap may include a cap body 233a that is press-fitted to the through hole H, and a membrane structure 233b coupled to the inside of the cap body 233a and having impermeability to liquid and permeability to gas.

The cap body 233a has a hollow stopper structure with a hollow center, and has a segmented locking jaw. Thus, when the locking jaw is pinched and inserted into the through hole H, it may be configured that the locking jaw is opened again so as not to be separated from the through hole H. The membrane structure 233b may be interposed in the center of the cap body 233a. According to the venting cap configuration as described above, normal air may flow into/out of the battery pack through the membrane structure 233b, and thus the internal and external pressure of the battery pack is balanced to prevent deformation of the pack case, thereby preventing moisture or foreign substances from penetrating into the battery pack. Also, in an emergency, the gas generated in the battery cells 110 may be discharged to the outside through the venting cap, and further, when the gas and flame intensify, the membrane structure 233b may be lost by heat and pressure, and the gas and flame may be discharged in a downward direction of the battery pack.

According to this embodiment of the present disclosure, it is possible to prevent a battery user and the like from being directly exposed to flames. In particular, in the case of an electric bike or an electric vehicle, a battery user, for example, a driver, may be positioned on the upper portion of the battery pack. At this time, as in the above embodiment, when a flame or the like is discharged in a downward direction, direct exposure of the driver to the flame may be prevented. Therefore, in this case, the safety of the battery pack may be enhanced.

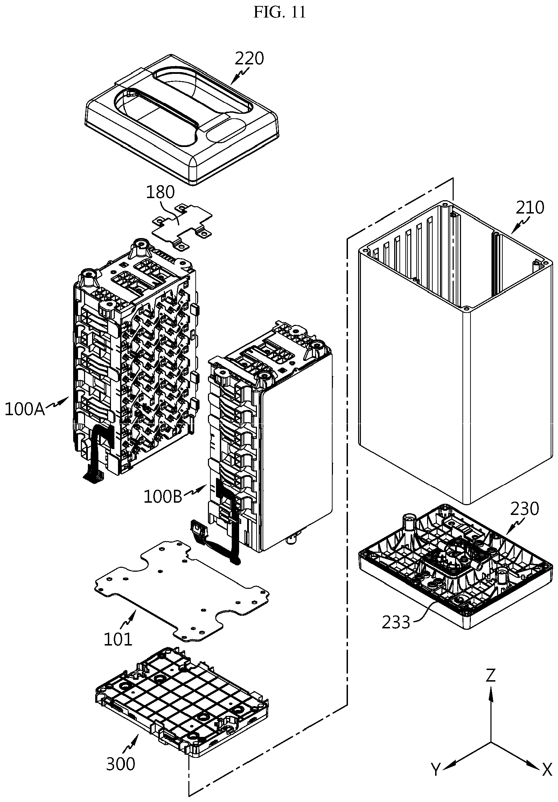

Hereinafter, the cell module assembly included in the battery pack of the present disclosure will be described in more detail with reference to FIGS. 11 to 21.

The first cell module assembly 100A and the second cell module assembly 100B included in the battery pack of the present disclosure have substantially the same main configuration. Therefore, the description of the first cell module assembly 100A is substituted for the description of the second cell module assembly 100B in order to omit the redundant description.

Referring to FIGS. 11 to 14, the cell module assembly 100 according to an embodiment of the present disclosure includes a plurality of cylindrical battery cells 110, a cell frame 120, a bus bar plate 130, and a sensing unit 140.

The plurality of battery cells 110 are cylindrical secondary batteries in which the top cap 112 is coupled to the upper end of the battery can as described above, and are accommodated in the cell frame 120 so that the upper end of the battery can, that is, the top cap 112 all face the same direction. Each of the battery cells 110 may be disposed upright inside the cell frame 120 in a state in which the upper end of the battery can is partially fitted and held in the cell holders 121a inside the cell frame 120.

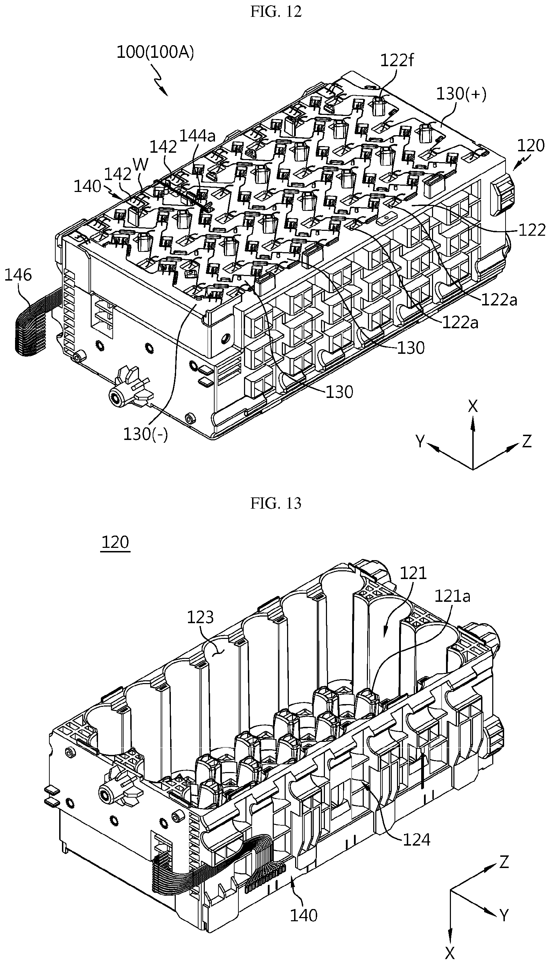

The cell frame 120, as shown in FIG. 13, may be provided in a substantially rectangular box shape with one side open. The cell frame 120 includes an accommodating portion 121 forming a space in which the battery cells 110 may be erected and accommodated, an upper plate portion 122 positioned in the direction of an upper end of the battery can, an opening 123 positioned in the direction of a lower end of the battery can, and a side portion 124 forming a four-sided wall.

The accommodating portion 121 refers to an internal space of the cell frame 120 surrounded by the upper plate portion 122 and the side portion 124, and may be configured to have a height corresponding to the length (or height) of the battery cells 110. In other words, the cell frame 120 of the present embodiment may be provided in a form in which the side portions 124 of four sides are extended by the length of the cylindrical battery cell 110.

The upper plate portion 122 of the cell frame includes terminal connection holes 122a. The upper end of the battery can of all the battery cells 110 may be partially exposed to the outside of the upper plate portion 122 of the cell frame through the terminal connection hole 122a. That is, all the battery cells 110 are accommodated in the cell frame 120, and the top cap 112 of each battery cell 110 and the upper edge 111a of the battery can may be partially exposed to the outside of the upper plate portion 122 of the cell frame through the terminal connection holes 122a.

As described above, in the case of a cylindrical battery cell, the top cap 112 may function as a positive electrode terminal and the battery can may function as a negative electrode terminal. (For reference, it may be configured such that the battery can is wrapped with an insulating sheet, thereby allowing only the bottom or top edge of the battery can to function as a negative electrode terminal.) Therefore, when the top cap 112 of each battery cell 110 or the top edge 111a of the battery can is connected to the bus bar plates 130 in a predetermined pattern, the battery cells may be connected to each other in series and/or in parallel. Here, the bus bar plate 130 is a metal material and may be provided to be attached to the outer surface of the upper plate portion 122 of the cell frame. A more detailed description of the electrical connection configuration of the battery cells 110 will be given later.

The opening 123 of the cell frame is provided on the opposite side of the upper plate portion 122 of the cell frame, and as shown in FIG. 13, only the outer edge portion is left and the inner region is provided in a completely open form. According to the opening 123 of the cell frame, during the assembly process of inserting the cylindrical battery cell 110, the opening 123 of the cell frame 120 is directed upward, and the cylindrical battery cells 110 may be integrally inserted into the cell frame 120 by using a cell insertion jig (not shown).

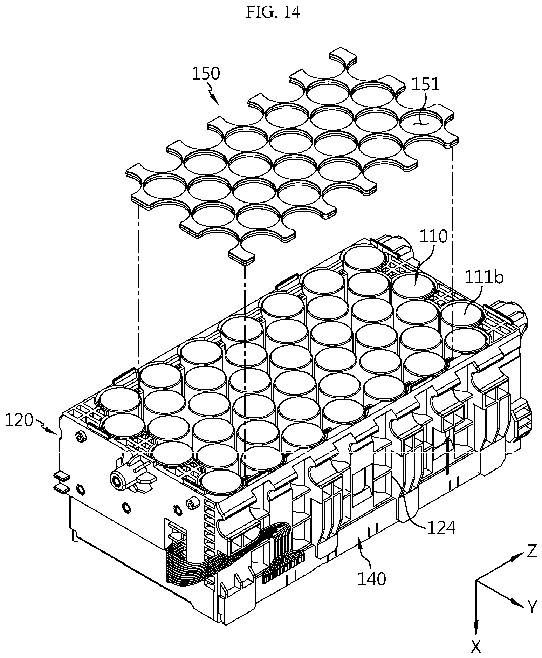

In addition, as shown in FIG. 14, by inserting all the cylindrical battery cells 110 into the cell frame 120 so that the bottom surface 111b of the battery can faces the opening 123 of the cell frame, the bottom surface 111b of all the battery cells 110 may be exposed to the outside of the cell frame 120 through the opening 123. Therefore, the cell module assembly 100 is easy to apply a heat dissipation configuration or a heat dissipation structure for radiating heat of the battery cells 110 toward the bottom surface 111b of the battery can.

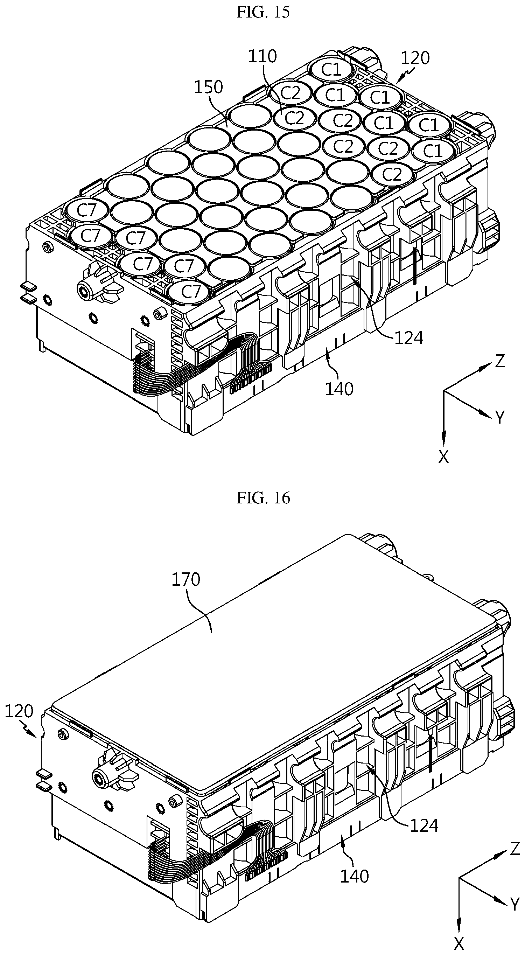

Referring to FIGS. 14 and 15, the cell module assembly 100 according to an embodiment of the present disclosure further includes a cell spacer 150. The cell spacer 150 is a component applied to prevent the movement of the lower ends of the battery cells 110 accommodated in the cell frame 120 and to maintain an interval.

The battery cells 110 accommodated in the cell frame 120 are disposed to stand upright inside the cell frame 120 in a state in which the upper end of each battery can is partially fitted and held in the cell holders 121a in the accommodating portion 121, and the lower end of each battery can may be held by the cell spacer 150. More specifically, the cell spacer 150 is an insulating material, has a plate shape detachable from the outer edge forming the periphery of the opening 123 of the cell frame, and includes a plurality of spacer holes 151 as shown in FIG. 14. The spacer hole 151 may have a diameter corresponding to the diameter of the battery can and may be formed to surround the lower end of the battery can.

As shown in FIG. 15, the cell spacer 150 is mounted at the opening 123 of the cell frame to block the movement of the battery cells 110, for example, even when an external shock or vibration is applied to the cell frame 120, thereby preventing the lower ends of the battery cans from contacting or colliding with each other.

Referring to FIG. 16, the cell module assembly 100 according to an embodiment of the present disclosure may further include a thermally conductive member that covers the cell spacer 150 and the lower end of the battery can and is coupled to the opening 123 of the cell frame 120. The thermally conductive member may include a heat dissipation pad 170 and a screen plate 160. Here, the screen plate 160 is made of an aluminum material and may be adhesively fixed to the bottom surface 111b of the battery can with a conductive adhesive.

Such a thermally conductive member (refer to FIG. 5) may be configured to be in contact with the wall surface of the middle case 210 when the cell module assembly 100 and the middle case 210 are assembled. According to this configuration, heat of the battery cell 110 may be effectively radiated to the middle case 210 through the heat transfer member.

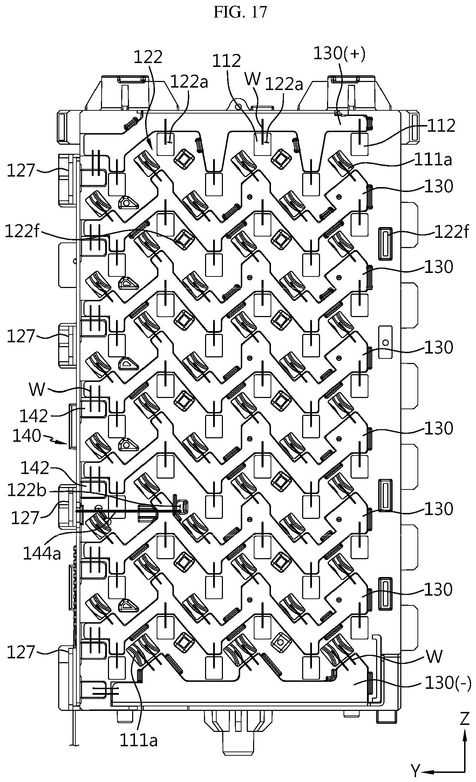

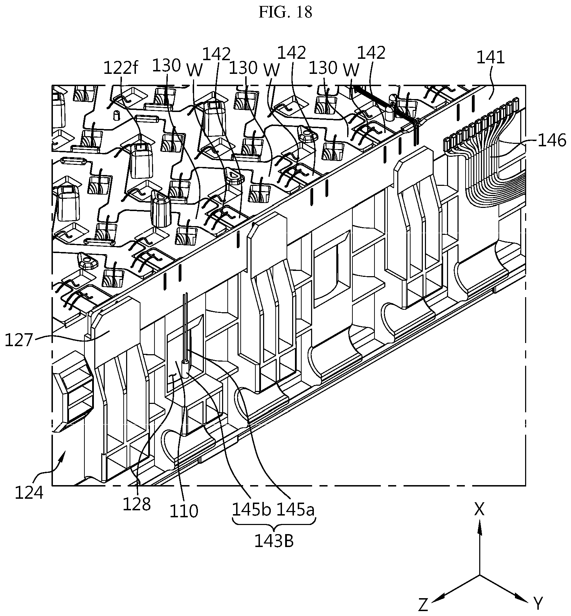

FIG. 17 is a view illustrating an upper plate portion of the cell frame according to an embodiment of the present disclosure, and FIG. 18 is a view illustrating a portion of an upper plate portion and a side portion of the cell frame of FIG. 17.

Next, an electrical connection configuration and a voltage/temperature sensing configuration of the battery cells 110 provided at the upper plate portion 122 and the side portion 124 of the cell frame in the cell module assembly 100 according to an embodiment of the present disclosure will be described with reference to FIGS. 17 and 18.

As shown in FIG. 17, a plurality of bus bar plates 130 may be disposed on one outer surface of the cell frame 120, in other words, on the upper plate portion 122 of the cell frame. For example, in FIG. 17, a positive electrode bus bar plate 130+ may be disposed at the end in the +Z direction, a negative electrode bus bar plate 130- may be disposed at the end in the -Z direction, and bus bar plates 130 may be disposed between the positive electrode bus bar plate 130+ and the negative electrode bus bar plate 130- at predetermined intervals in the ±Z direction. Also, the bus bar plates 130 may be provided to extend in the ±Y direction in a straight line or a zigzag form in order to avoid the position of the terminal connection holes 122a or the position of the protrusions 122f formed in the upper plate portion 122 of the cell frame.

The plurality of bus bar plates 130 are wire-bonded to the upper edge 111a of the battery can or the top cap 112 of the battery cells 110 exposed through the terminal connection holes 122a to serve to electrically connect the battery cells 110. Here, the wire bonding means that both ends of the metal wire W are compressed by ultrasonic waves to the bonding object, respectively. However, other bonding techniques, such as laser welding, may be applied to wire bonding, not necessarily ultrasonic waves.

Specifically, in the six battery cells 110 indicated by 'C1' in FIG. 15, as shown in FIG. 17, the top cap 112 is wire-bonded to the positive electrode bus bar plate 130+, and the upper edge 111a of the battery can is wire-bonded to the second bus bar plate 130 adjacent to the positive electrode bus bar plate 130+ in the -Z direction. Also, in the six battery cells 110 indicated by 'C2' in FIG. 15, the top cap 112 is wire-bonded to the second bus bar plate 130, and the upper edge 111a of the battery can is wire-bonded to the third bus bar plate 130 in the -Z direction. In this pattern, the top cap 112 of the battery cells 110 or the upper edge 111a of the battery can is wire-bonded to the corresponding bus bar plates 130, and finally, when the upper edge 111a of the battery can of the last six battery cells 110 indicated by 'C7' in FIG. 15 is wire-bonded to the negative electrode bus bar plate 130-, the battery cells 110 included in the cell module assembly 100 may be connected in series and in parallel in the form of 7S6P. In addition, the positive electrode bus bar plate 130+ may function as a positive electrode terminal of the cell module assembly 100 and the negative electrode bus bar plate 130- may function as a negative electrode terminal of the cell module assembly 100.

Referring to FIG. 18, the sensing unit 140 according to an embodiment of the present disclosure includes a printed circuit board 141, a plurality of sensing plates 142, and a temperature sensing member 143B. In addition, the sensing unit 140 is disposed on the other outer surface of the cell frame 120 intersecting the upper plate portion 122 of the cell frame that is configured as described above for the electrical connection to the battery cells 110, and is electrically connected to the bus bar plates 130 by wire bonding to sense voltage information of the battery cells 110.

As the printed circuit board 141, a rigid printed circuit board 141 and a flexible printed circuit board 141 may be employed. The cell module assembly 100 of the present embodiment includes a rigid printed circuit board 141 to enhance durability, and the printed circuit board 141 has a circuit pattern for transmitting voltage information or temperature information of the battery cells 110. In addition, the printed circuit board 141 may be configured to be detachable from the side portion 124 of the cell frame 120. More specifically, as shown in the exemplary configuration of FIG. 18, the printed circuit board 141 may be disposed on the side portion 124 of the cell frame 120 intersecting the upper plate portion 122 of the cell frame on which the bus bar plates 130 are disposed. At this time, the printed circuit board 141 may be configured such that the plate surface faces the side portion 124 of the cell frame 120 and the upper edge of the printed circuit board 141 is positioned at the same height as the upper plate portion 122 of the cell frame.

As described above, in order for the printed circuit board 141 to be disposed on the side portion 124 of the cell frame 120, the side portion 124 of the cell frame 120 includes a substrate holder 127 in which the printed circuit board 141 may be inserted parallel to the side portion 124 of the cell frame 120 to a predetermined depth and the printed circuit board 141 is supported so that the plate surface of the printed circuit board 141 is in close contact with the side portion 124 of the cell frame 120.

The substrate holder 127 may be provided at predetermined intervals along the longitudinal direction (Z direction) of the cell frame 120, and may be provided on the side portion 124 of the cell frame 120 so as not to interfere with the temperature sensing member 143 or the cable connector 146 on the printed circuit board 141.

The plurality of sensing plates 142 are components connected to the bus bar plates 130 by wire bonding in order to sense a voltage for each bank of the battery cells 110 (battery cells 110 connected in parallel). The plurality of sensing plates 142 may be provided in a number of one-to-one correspondence to the bus bar plates 130 and may be connected to the corresponding bus bar plates 130 by wire bonding. The sensing plates 142 may be made of a metal having electrical conductivity, such as nickel, copper (Cu), or silver (Ag), or the like.

The plurality of sensing plates 142 are provided in a structure bent at least once, so that one side thereof may be fixedly coupled to the printed circuit board 141 and the other side thereof may be disposed parallel to the surface of the upper plate portion 122 of the cell frame 120 on which the bus bar plates 130 are disposed.

For example, the plurality of sensing plates 142 are made of an electrically conductive metal material, are provided in an approximately '¬' to 'L' shape, and may be coupled to the printed circuit board 141 as in the exemplary configuration of FIG. 18. In addition, the sensing plates 142 may be disposed at the edge of the cell frame 120 alternately with one end of the bus bar plates 130. According to the above configuration, it may be disposed immediately adjacent to one end of the corresponding bus bar plate 130 without interfering with the wire bonding region connecting the bus bar plates 130 widely distributed in the inner edge region of the upper plate portion 122 of the cell frame and the battery cells 110, and thus it is possible to connect the sensing plate 142 and the bus bar plate 130 by any number of metal wires W having a short length.

In addition, the bus bar plate 130 and the sensing plate 142 may be connected by two metal wires W. In this case, voltage sensing may be performed even if one of the two metal wires W is disconnected, and thus voltage sensing reliability and durability may be increased.

The metal wire W connecting the battery cell 110 and the bus bar plate 130 or the sensing plate 142 and the bus bar plate 130 according to the present embodiment may have a diameter of 0.12 mm to 0.8 mm, a length of 5 mm to 10 mm, and may be made of an aluminum material. According to the above configuration, the metal wire W may operate as a fuse when the battery pack is short-circuited externally. For example, since the metal wire W is configured as described above in the cell module assembly 100 according to the present embodiment, for example, when a current of 47.4 A or more flows, the metal wires W of the battery cells 110 of at least one bank are all cut off, and thus the flow of current in the cell module assembly 100 may be blocked. Meanwhile, it should be noted that the scope of the present disclosure is not limited to the diameter, length, and material of the metal wire W. The metal wire W may have a diameter and a length appropriately selected as needed, and its material may also be made of a metal such as copper, nickel, or the like.

Meanwhile, referring to FIGS. 17 and 18, the temperature sensing member includes two temperature sensing members having different lengths. Among the two temperature sensing members, a temperature sensing member having a relatively long cable 144a is a first temperature sensing member used to measure the central temperature of the cell module assembly 100, and a temperature sensor having a relatively short cable 145a is a second temperature sensing member 143B used to measure the outer temperature of the cell module assembly 100.

The battery pack needs to accurately sense the heat generated from the battery cells 110 during charge/discharge, and accordingly needs to manage or cool the charge/discharge. Otherwise, the degradation rate of the battery cells 110 is increased and the performance is deteriorated. Therefore, in order to effectively perform thermal management of the battery cells 110 included in the cell module assembly 100, it is necessary to accurately understand the temperature of each battery cell 110 having the highest temperature and the lowest temperature among the battery cells 110. Accordingly, the cell module assembly 100 of the present embodiment is configured to measure the temperature of the battery cell 110 in the central region having the highest temperature inside the cell frame 120 and the temperature of the battery cell at the periphery having the lowest temperature inside the cell frame.

For example, the first temperature sensing member may be configured such that the cable extends from the circuit board to the temperature sensing hole 122b located in the central region of the upper plate portion of the cell frame, and the thermistor coupled to the end of the cable senses the temperature of the battery cell at the corresponding position through the temperature sensing hole 122b.

Also, as shown in FIG. 18, the second temperature sensing member may be configured such that a cable 145a and a thermistor 145b are in contact with a battery cell partially exposed to the outside through a side cut-out hole 128 formed through the side portion 124 of the cell frame 120. In this case, the thermistor 145b may be adhesively fixed to the side portion of the battery cell 110 with a thermally conductive adhesive (not shown).

According to the above configuration, it is possible to measure the temperature of the battery cells 110 located in the central region and the outer region among the battery cells 110 included in the cell module assembly 100, and besides, to perform the assembly of the first and second temperature sensing members very easily and simply.

The voltage information and temperature information of the battery cells 110 included in the cell module assembly 100 are sensed with the voltage sensing and temperature sensing configuration as described above, and the voltage information and temperature information may be transmitted from the printed circuit board 141 to the BMS assembly 300 through the cable connector 146.

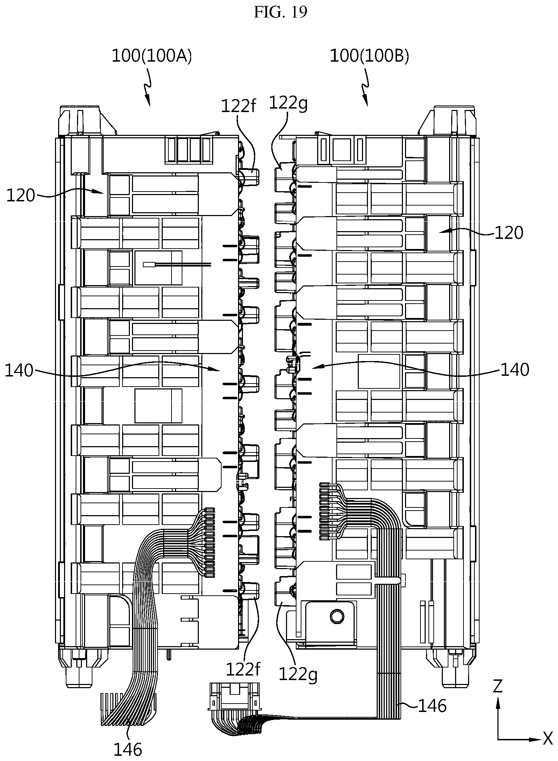

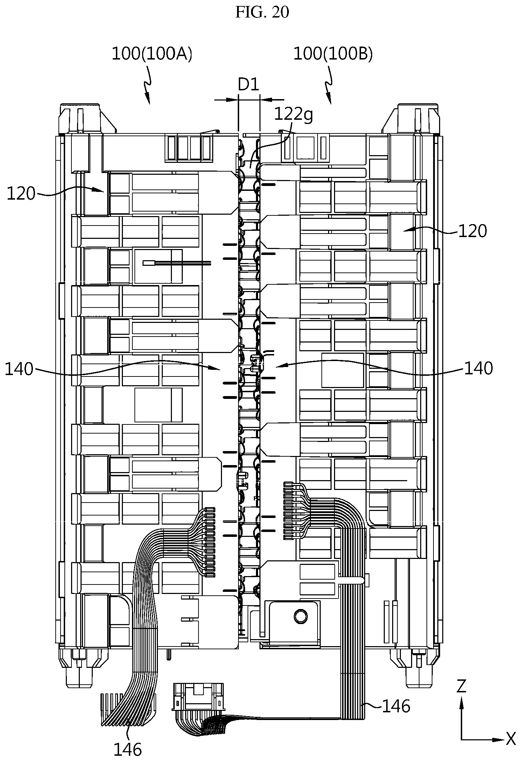

FIGS. 19 and 20 are views illustrating shapes before and after assembly of the two cell module assemblies according to an embodiment of the present disclosure.

Next, an assembly structure of the two cell module assemblies 100A, 100B according to an embodiment of the present disclosure will be briefly described with reference to FIGS. 19 to 20.

In the two cell module assemblies 100A, 100B, the cell frames 120 may be configured to be coupled to each other so that the upper plate portions 122 of the cell frames face each other. Referring to FIG. 19, the upper plate portion 122 of one of the two cell frames 120 may include one or more protrusions 122f protruding in the coupling direction, and the upper plate portion 122 of the other cell frame may include one or more spacing columns 122g protruding in the coupling direction and provided to insert the protrusions 122f therein. That is, a plurality of the protrusions 122f may be provided on the upper plate portion 122 of the cell frame of the first cell module assembly 100A, and the spacing columns 122g may be provided on the upper plate portion 122 of the cell frame of the second cell module assembly 100B to correspond to the number and position of the protrusions 122f.

With this configuration, as shown in FIG. 20, the protrusions 122f of the first cell module assembly 100A may be press-fitted to the spacing columns 122g of the second cell module assembly 100B, and by the coupled protrusions 122f and spacing columns 122g, the first cell module assembly 100A and the second cell module assembly 100B may be coupled so as not to move the opponent while maintaining a predetermined interval therebetween as indicated by 'D1' in FIG. 20. Therefore, the wire bonding area formed on the upper plate portion 122 of the cell frame of the first cell module assembly 100A and the wire bonding area formed on the upper plate portion 122 of the cell frame of the second cell module assembly 100B do not contact each other. In addition, the two cell module assemblies 100 physically coupled to each other may be connected in series with each other by an interconnection bus bar 180 of FIG. 11. Here, the interconnection bus bar 180 may be configured in the form of a metal plate disposed in contact with the positive electrode bus bar plate 130+ of the first cell module assembly 100A and the negative electrode bus bar plate 130- of the second cell module assembly 100B. When the two cell module assemblies are electrically connected as described above, the battery pack according to the present embodiment includes battery cells connected in series and in parallel in the form of 14S6P.

Next, a battery pack according to another embodiment of the present disclosure will be briefly described. The same reference numbers as in the above-described embodiment represent the same members, duplicate descriptions of the same members will be omitted, and differences from the above-described embodiment will be mainly described.

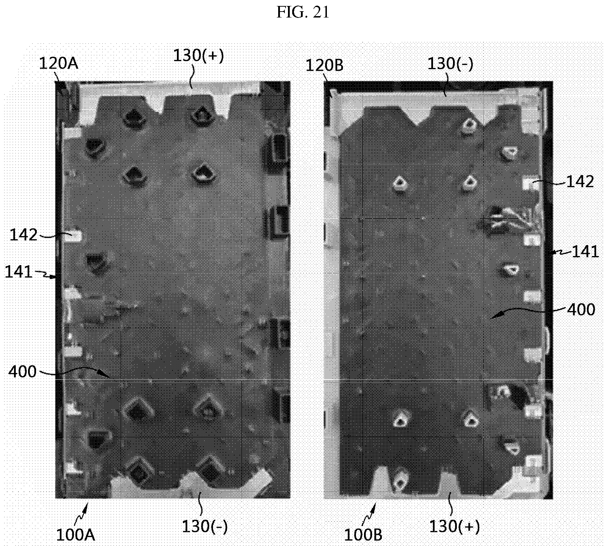

When compared with the battery pack according to the above-described embodiment, the battery pack according to another embodiment of the present disclosure further includes potting glue 400 applied to the outer surface of the upper plate portion of the cell frame, as shown in FIG 21, and the rest of configuration is the same as that of the above-described embodiment.

As the potting glue 400, for example, a silicone-based resin may be employed. The potting glue 400 may be filled not only on the outer surface of the upper plate portion 122 of the cell frame, but also on the inside of the cell frame 120. The potting glue 400 may be configured to cover the upper edge 111a of the battery can and the top cap 112 partially exposed to the upper plate portion of the cell frame so as not to be exposed to the outside.

That is, as shown in FIG. 21, according to the exemplary configuration to which the potting glue 400 is applied, for example, even if the electrode plate fragment of the corresponding battery cell 110, flames, sparks, or the like are ejected on account of the explosion of the battery cell 110 included in the first cell module assembly 100A, the effect of preventing a chain ignition may be further increased due to the fact that the top caps 112 of the battery cells 110 of the second cell module assembly 100B are covered with the potting glue 400. In addition, the potting glue 400 may further increase insulation between the electrical connection configuration of the first cell module assembly 100A and the electrical connection configuration of the second cell module assembly 100B, which are distributed close to the central region of the battery pack. Therefore, it can be said that the battery pack according to another embodiment of the present disclosure is further improved in terms of not only fire safety and electrical insulation, but also fixability to battery cells, compared to the battery pack according to the above-described embodiment.

The battery pack according to the present disclosure may be applied to a vehicle such as an electric bike, an electric vehicle, and the like. Alternatively, the battery pack according to the present disclosure may be applied to an energy storage system (ESS). That is, a device according to the present disclosure, such as an electric bike, an electric vehicle, an energy storage system, or the like, may include one or more battery packs according to the present disclosure.

Meanwhile, the terms indicating directions as used herein such as upper, lower, left, and right are used for convenience of description only, and it is obvious to those skilled in the art that the terms may change depending on the position of the stated element or an observer.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the equivalent scope of the appended claims.

## Claims

1. A battery pack comprising:
a pack case; and
two cell module assemblies each having cylindrical battery cells and a cell frame accommodating the cylindrical battery cells, and being integrally accommodated in the pack case,
wherein the two cell module assemblies are configured such that the top caps of the cylindrical battery cells face each other with at least a predetermined minimum safety distance therebetween.

2. The battery pack according to claim 1,
wherein the two cell module assemblies are configured such that the top cap of each cylindrical battery cell facing each other is disposed at the center of the pack case, and the bottom surface of the battery can of each cylindrical battery cell is disposed to face the wall surface of the pack case.

3. The battery pack according to claim 1,
wherein the minimum safety distance is at least 5 mm.

4. The battery pack according to claim 2,
wherein the two cell module assemblies comprise a first cell module assembly and a second cell module assembly,
wherein one surface of the first cell frame to which the top cap of the cylindrical battery cell is exposed in the first cell module assembly and one surface of the second cell frame to which the top cap of the cylindrical battery cell is exposed in the second cell module assembly are spaced apart by at least the minimum safety distance, and
an empty space formed between the one surface of the first cell frame and the one surface of the second cell frame communicates with a bottom plate in the pack case, and a venting portion is provided on the bottom plate.

5. The battery pack according to claim 4,
wherein the pack case comprises:
a middle case having a hollow structure with open upper and lower ends and surrounding the periphery of the two cell module assemblies;
an upper cover that covers the upper opening of the middle case; and
a lower cover that covers the lower opening of the middle case,
wherein the lower cover comprises the bottom plate and the venting portion.

6. The battery pack according to claim 5,
wherein the middle case comprises:
a first wall surface and a second wall surface that face the bottom surface of the battery can of the cylindrical battery cell and extend along the longitudinal direction of the pack case in parallel with each other; and
a third wall surface and a fourth wall surface that cover both sides of the empty space formed between the one surface of the first cell frame and the one surface of the second cell frame while being spaced apart from both sides of the empty space by a predetermined distance and extend along the longitudinal direction of the pack case in parallel with each other.

7. The battery pack according to claim 6,
which comprises a bottom plate coupled to the inside of the middle case to cover and support the lower ends of the two cell module assemblies facing the lower cover,
wherein the bottom plate comprises a gas passage portion forming a gap with at least one of the third wall surface and the fourth wall surface.

8. The battery pack according to claim 5,
wherein the venting portion comprises a venting cap that is press-fitted to the through hole formed in the bottom plate.

9. The battery pack according to claim 8,
wherein the venting cap comprises a cap body that is press-fitted to the through hole; and a membrane structure that is coupled to the inside of the cap body, is impermeable to liquid and is permeable to gas.

10. The battery pack according to claim 1,
wherein the cylindrical battery cells are accommodated in the cell frame so that the top caps all face the same direction.

11. The battery pack according to claim 10,
wherein the cell frame is provided to be open at one side thereof and comprises:
an accommodating portion provided to form a space for accommodating the battery cells upright and to have a height corresponding to the length of the battery cells;
an upper plate portion covering the top cap direction of the battery cell; and
an opening exposing the bottom surface of the battery can of the battery cell to the opposite surface of the upper plate portion,
wherein the upper plate portion comprises terminal connection holes that partially expose the top cap of the battery cell or the upper edge of the battery can of the battery cell.

12. The battery pack according to claim 11,
wherein metal bus bar plates are attached to the outer surface of the upper plate portion of the cell frame, and
the bus bar plates are wire-bonded to an upper edge of the battery can or the top cap of each of the battery cells exposed through the terminal connection holes.

13. The battery pack according to claim 11,
which comprises a cell spacer that surrounds all or part of the periphery of the lower end of the battery can and is coupled to the opening of the cell frame.

14. The battery pack according to claim 13,
which comprises a thermally conductive member where one side is in contact with the bottom surface of the battery can and the other side is in contact with the wall surface of the pack case.

15. The battery pack according to claim 11,
wherein a potting glue is applied to the outer surface of the upper plate portion of the cell frame, so that the top cap and the upper edge of the battery can are covered with the potting glue.

16. An electric bike comprising the battery pack according to any one of claims 1 to 15.

17. An electric vehicle comprising the battery pack according to any one of claims 1 to 15.
